# EUROPEAN PATENT APPLICATION

(11) **EP 1 837 831 A2**
(43) Date of publication of application: **26.09.2007**
(21) Application number: 07104572.8
(22) Date of filing: 21.03.2007
(51) Int. Cl.: G07C 9/00

(54) **Case for portable device**

(30) Priority: 22.03.2006 JP 2006078328
(71) Applicant: KABUSHIKI KAISHA TOKAI RIKA DENKI SEISAKUSHO, Niwa-gun, Aichi 480-0195 (JP)
(72) Inventor: Sugiyama, Hiroyuki, Kabushiki Kaisha Tokai Rika Denki Seisakusho, Niwa-gun, Aichi 480-0195 (JP); Yoshida, Yutaka, Kabushiki Kaisha Tokai Rika Denki Seisakusho, Niwa-gun, Aichi 480-0195 (JP); Murakami, Takeshi, Kabushiki Kaisha Tokai Rika Denki Seisakusho, Niwa-gun, Aichi 480-0195 (JP)
(74) Representative: Karlsson, Leif Karl Gunnar

(57) **Abstract**

A portable device enabling a user to visually recognize tampering with internal components. The portable device is for performing wireless communication with a predetermined communication subject and includes a circuit board, on which an electronic component used to perform wireless communication is mounted, and a case for accommodating the circuit board. The case includes a first case part 13 and a second case part 14. The first case part has a non-transparent portion 13a; 121 that is non-transparent to visible light and a transparent portion 13b; 122 that is transparent to visible light, arranged adjacent to and outward from the non-transparent portion, and transmissible to laser light. The second case part is transparent to visible light and formed from a synthetic resin. The second case part absorbs laser light and is superimposed with the first case part in a state joined with the transparent portion.

## Description

The present invention relates to a portable device for performing wireless communication with a predetermined communication subject.

Vehicles, such as automobiles, nowadays often incorporate electronic key systems to improve vehicle operation convenience. Such an electronic key system locks and unlocks doors and enables the starting of the engine when a unique ID code transmitted from a portable device, which is carried by a user, is identical to an ID code registered in the vehicle. The portable device has a case for accommodating a circuit board on which various electronic components are mounted and a battery for supplying power to the electronic components on the circuit board.

Japanese Laid-Open Patent Publication No. 2005-235837 describes an example of a case for a portable device. The case of the portable device is formed by a first case part and a second case part, which are fastened to each other. More specifically, the first case part has an open end. A plurality of projections are formed at predetermined intervals along the rim of the first case part at the open end. The second case part also has an open end. A plurality of recesses are formed in the rim of the second case part at the open end in correspondence with the projections of the first case part. The projections are engaged with the recesses to fasten the first and second case parts to each other.

The first case part and the second case part are fastened to each other only by the engagement between the projections and the recesses. Thus, a person other than the user may be able to disassemble the case of the portable device in a relatively simple manner. Such a person may disassemble the case by the projections of the first case part from the recesses of the second case part in order to remove the circuit board from the case. If the first and second case parts are fastened again to each other after the circuit board is removed, the user would not be aware for a while of tampering with the circuit board.

The present invention provides a case and portable device enabling tampering of the circuit board to be visually recognizable.

One aspect of the present invention is a case for accommodating a predetermined component. The case includes a first case part formed from a synthetic resin. The first case part includes a non-transparent portion that is non-transparent to visible light and a transparent portion that is transparent to visible light, arranged adjacent to and outward from the non-transparent portion, and transmissible to laser light. A second case part (14) that is transparent to visible light is formed from a synthetic resin. The second case part absorbs laser light and is superimposed with the first case part in a state joined with the transparent portion.

Another aspect of the present invention is a portable device for performing wireless communication with a predetermined communication subject. The portable device includes a circuit board, on which an electronic component used to perform wireless communication is mounted, and a case for accommodating the circuit board. The case includes a first case part formed from a synthetic resin. The first case part includes a non-transparent portion that is non-transparent to visible light and a transparent portion that is transparent to visible light, arranged adjacent to and outward from the non-transparent portion, and transmissible to laser light. A second case part is transparent to visible light and formed from a synthetic resin. The second case part absorbs laser light and is superimposed with the first case part in a state joined with the transparent portion.

The invention, together with objects and advantages thereof, may best be understood by reference to the following description of the presently preferred embodiments together with the accompanying drawings in which:
Fig. 1A is a cross-sectional view or a portable device according to a preferred embodiment of the present invention;
Fig. 1B is a schematic perspective view showing the portable device;
Fig. 2 is an exploded perspective view showing the portable device;
Fig. 3 is an exploded perspective view showing the portable device reversed from the state of Fig. 2;
Fig. 4 is a cross-sectional view taken along line IV-IV in Fig. 1A;
Fig. 5 is a side view showing the portable device when viewed in the direction of arrow V in Fig. 1B;
Fig. 6A is a side view showing the portable device in a state in which a mechanical key is removed therefrom when viewed in the direction of arrow VI in Fig. 1B;
Fig. 6B is a schematic perspective view showing the portable device in a state in which the mechanical key is removed therefrom;
Fig. 7A is a plan view showing the portable device in a state in which a second case part is removed therefrom;
Fig. 7B is a lower view showing the second case part and the mechanical key;
Fig. 7C is an enlarged view of Fig. 7B showing an engagement structure for second case part and the mechanical key;
Fig. 8 is a schematic diagram showing a laser welding device;
Fig. 9 is a cross-sectional view taken along line IX-IX in Fig. 1 and shows a first resin portion and a second resin portion of the first case part;
Fig. 10 is a lower view showing a laser beam emission route along the case in a state in which a cover is removed therefrom;
Fig. 11 is a cross-sectional view taken along line IX-IX in Fig. 1 and shows first and second resin members in a joined state according to a second embodiment of the present invention;
Fig. 12A is an exploded perspective view showing the first and second resin members; and
Fig. 12B is a schematic perspective view showing the second resin member from the opposite side of Fig. 12A.

A portable device 11, which performs wireless communication with a predetermined communication subject, according to a preferred embodiment of the present invention will now be discussed. The portable device is used in an electronic, key system together with a lock controller, which is installed in a vehicle. When a user, who is carrying the portable device 11, enters within a predetermined range set for the vehicle, the portable device 11 receives a request signal transmitted from the lock controller. In response, the portable device 11 transmits an ID signal, which contains an ID code of the portable device 11. The lock controller receives the ID signal the portable device 11 and compares the ID code contained in the ID signal with an ID code of the vehicle that is stored in the lock controller. When the ID codes are identical, the lock controller unlocks the vehicle doors.

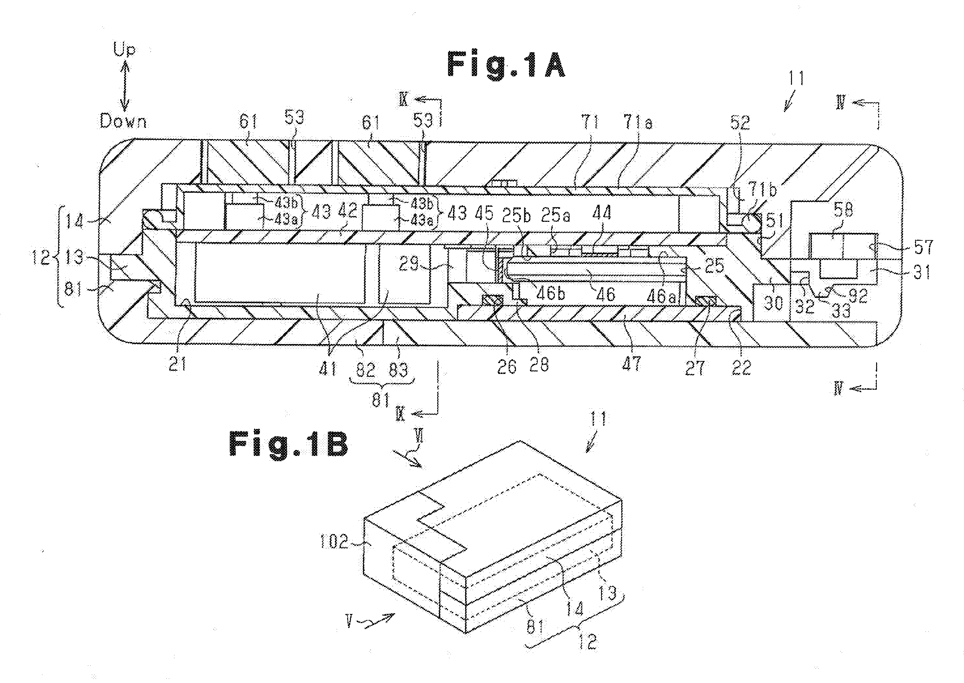

Referring to Fig. 1A, the portable device 11 includes a case 12, which is formed by a first case part 13, a second case part 14, and a cover 81. As viewed in Fig. 1A, the first case part 13 has an upper portion, which is open, and a lower portion. The second case part 14 has a lower portion, which is open and fixed to the first case part 13 so as to cover the open upper portion of the first case part 13. The cover 81 covers the lower portion of the first case part 13. When assembled together, the first case part 13, the second case part 14, and the cover 81 form a box as shown in Fig. 1B. Hereafter, the upper direction and lower direction of the portable device 11 will be based on the view in Fig. 1B throughout the drawings.

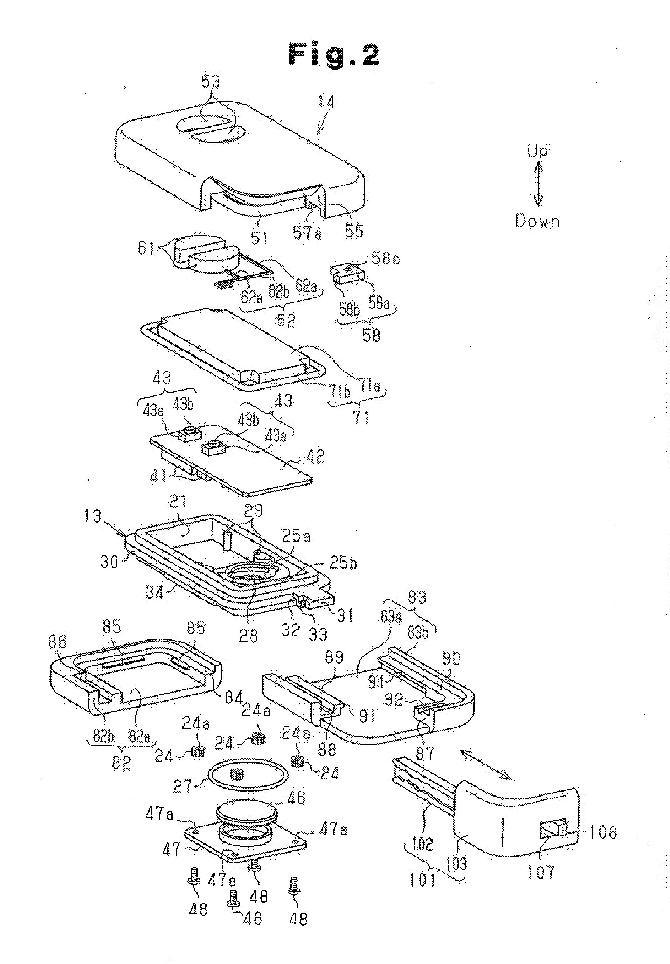

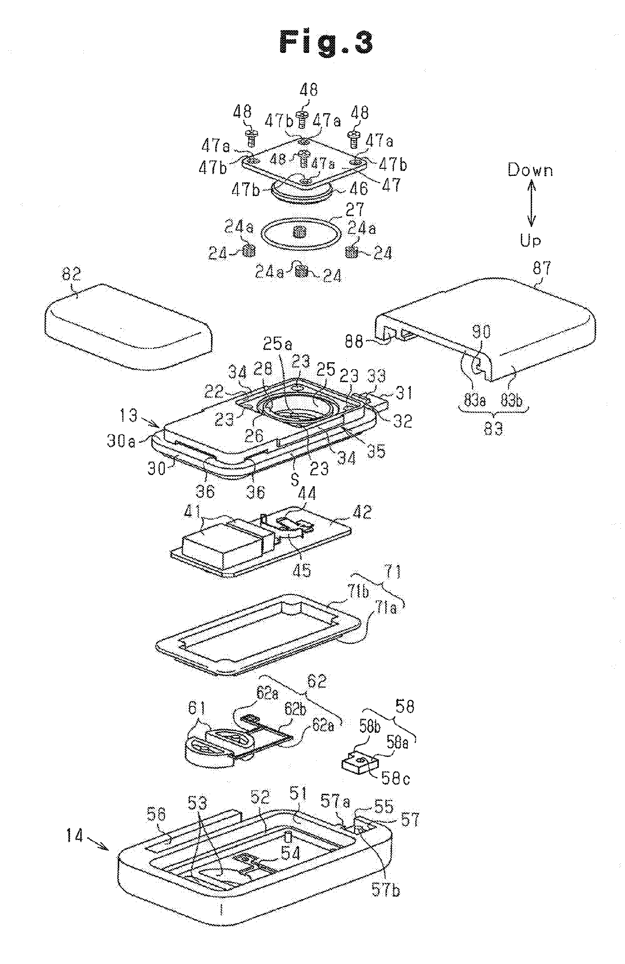

Referring to Fig. 2, the first case part 13, which is integrally injection molded from a synthetic resin, is box-shaped. A board compartment 21 is defined in the first case part 13. As shown in Fig. 3, a square battery lid seat 22 is defined in a portion of the lower surface of the first case part 13. Bushing sockets 23 are formed in the four corners of the battery lid seat 22. A cylindrical bushing 24 is fitted into each bushing socket 23. A threaded hole 24a extends through the bushing 24.

A circular and hollow battery compartment 25 is defined in the central portion of the battery lid seat 22. An annular groove 26 is formed between the battery compartment 25 and the four bushing sockets 23. The groove 26 receives a rubber O-ring 27. As shown in Fig. 2, a through hole 25a extends through the bottom wall of the battery compartment 25. An opening 25b is formed in the side wall of the battery compartment 25. An arcuate stopper 28 is formed along the rim of the battery compartment 25 at the open end. The stopper 28 faces toward the inner side of the battery compartment 25.

Board supports 29 are formed on the inner surfaces of the two opposing long walls of the first case part 13. The board supports 29 extend in a direction orthogonal to the bottom surface of the first case part 13, Each board support 29 has an upper end located at the same level as the upper surface of the battery compartment 25.

A rectangular flange 30 extends along the peripheral surface of the first case part 13 at the middle of the first case part 13 in the heightwise direction. A plate-shaped tongue 31 extends from the portion of the flange 30 extending along the short wall of the first case part 13 located next to the battery compartment 25. The upper and lower surfaces of the tongue 31 are flush with the upper and lower surfaces of the flange 30 as viewed in Fig. 1A. A groove 32 having a square cross-section and functioning as a brittle portion, extends entirely across the tongue 31. Further, an engaging portion, or projection 33, extends across the lower surface of the tongue 31, as viewed in Fig. 3.

Rails 34 having a predetermined length extend parallel to and below the flange 30 along the two opposite long walls of the first case part 13, as viewed in Fig. 3. A guide groove 35 is defined between the flange 30 and each rail 34. Recesses 36 are formed in the outer side of the two long walls and one short wall of the first case part 13 near the battery compartment 25. The recesses 36 are formed so that they are located at a level that differs from the level of the rails 34 in the vertical direction.

Referring to Fig. 1, the board compartment 21 of the first case part 13 accommodates a circuit board 42. A microcomputer (now shown) and various electronic components 41, such as electronic devices that form a communication circuit, are connected to the circuit board 42. The circuit board 42 is rectangular and shaped in correspondence with the board compartment 21. Push switches (micro switches) 43 are arranged in parallel in the longitudinal direction on the upper surface of the circuit board 42. Each push switch 43 has a housing 43a, which is fixed to the circuit board 42, and an actuator 43b, which is exposed from the housing 43a. The actuator 43b is pushed to close a contact (not shown) arranged in the housing 43a. As a result, the push switch 43 sends a detection signal indicating that the contact has closed to the microcomputer arranged in the circuit board 42. In response to the detection signal from the push switch 43, the microcomputer externally transmits control information for locking or unlocking the vehicle doors and an ID signal, which contains an ID code of the microcomputer, from a communication circuit arranged on the circuit board 42.

A negative contact 44 and a positive contact 45 are arranged on the lower surface of the circuit board 42 as viewed in Fig. 1A. When the circuit board 42 is retained in the board compartment 21, the negative contact 44 is exposed to the battery compartment 25 through the through hole 25a. Further, when the circuit board 42 is retained in the board compartment 21, the positive contact 45 is exposed to the battery compartment 25 through the opening 25b.

The circuit board 42 is fitted into the board compartment 21 from above with the two push switches 43 facing an upward direction. Movement of the circuit board 42 into the board compartment 21 is restricted when the circuit board 42 abuts against the four board supports 29 and the upper surface of the battery compartment 25. The upper ends of the four board supports 29 and the upper surface of the battery compartment 25 are located at the same height from the bottom surface of the first case part 13. Thus, the circuit board 42 is held in a state parallel to the bottom surface of the first case part 13.

A battery 46, which supplies the electronic components 41 on the circuit board 42 with operational power, is retained in the battery compartment 25. In the preferred embodiment, the battery 46 is a coin-type battery. When the battery 46 is retained in the battery compartment 25, a battery lid 47 is attached to the battery lid seat 22. More specifically, as shown in Fig. 3, the battery lid 47 is a square plate shaped in correspondence with the battery lid seat 22. Insertion holes 47a extend through the four corners of the battery lid 47. When attaching the battery lid 47 to the battery lid seat 22, the insertion holes 47a are aligned with the threaded holes 24a of the corresponding bushings 24.

Screws 48 are inserted into the insertion holes 47a and mated with the threaded holes 24a of the bushings 24 to fix the battery lid 47 to the battery lid seat 22. Each screw 48 has a head, and each insertion, hole 47a includes a counterbore 47b for receiving the head of the corresponding screw 48 such that the head does not project out of the surface of the battery lid 47. The upper surface of the battery 46 functions as a negative electrode 46a and the peripheral surface of the battery 46 functions as a positive electrode 46b. When the battery lid 47 is fixed to the battery lid seat 22, the negative electrode 46a of the battery 46 is forced against the negative contact 44, which is exposed to the battery compartment 25 through the through hole 25a. This ensures that the negative electrode 46a of the battery 46 contacts the negative contact 44 under pressure. Further, the positive electrode 46b of the battery 46 resiliently contacts the positive contact 45, which is exposed to the battery compartment 25 through the opening 25b.

Referring to Fig. 3, the second case part 14, which is integrally injection molded from a synthetic resin, is box-shaped. The opening of the second case part 14 defines a fitting portion 51 for receiving the first case part 13. The portion of the first case part 13 above the upper surface of the flange 30, as viewed in Fig. 1A, can be fitted into the fitting portion 51 in a state in which the circuit board 42 is attached to the first case part 13. A step 52 extends along the inner surface of the fitting portion 51. Two semicircular button receptacles 53 extend through the second case part 14 into the fitting portion 51. The two button receptacles 53 are spaced apart in the longitudinal direction of the second case part 14 facing opposite directions. When the first case part 13 having the circuit board 42 attached thereto is fitted into the fitting portion 51 of the second case part 1.4, the two button receptacles 53 are aligned with the actuators 43b of the push switches 43 on the circuit board 42. A U-shaped connection groove 54 is formed in the inner surface of the second case part 14 so as to connect the two button receptacles 53.

The second case part 14 has two opposite long walls and two opposite short walls. One of the short walls and one of the long walls are thicker than the other one of the short walls and the other one of the long walls. An L-shaped cutaway portion 55 is formed in the corner formed by the thicker long and short walls. The cutaway portion 55 continuously extends from the thick long side for about two thirds of the short wall. Further, an elongated groove 56 extends along the thick long wall. The elongated groove 56 has an end that opens to the cutaway portion 55. A hollow first lock member holder 57 is formed in the thick short wall. The first lock member holder 57 has an open portion 57a facing toward the cutaway portion 55. The first lock member holder 57 is in communication with the cutaway portion 55 through the open portion 57a. A positioning projection 57b is formed in the first lock member holder 57.

In a state in which the portion of the first case part 13 above the flange 30 is fitted into the fitting portion 51 of the second case part 14 so that the second case part 14 comes into contact with the flange 30, the first case part 13 and the second, case part 14 are fastened together. In the preferred embodiment, the upper surface of the flange 30 and the lower surface of the second case part 14 are thermally welded together. In a state in which the first case part 13 and the second case part 14 are fastened to each other, the actuators 43b of the two push switches 43 on the circuit board 42 aligned with the two button receptacles 53 of the second case part 14.

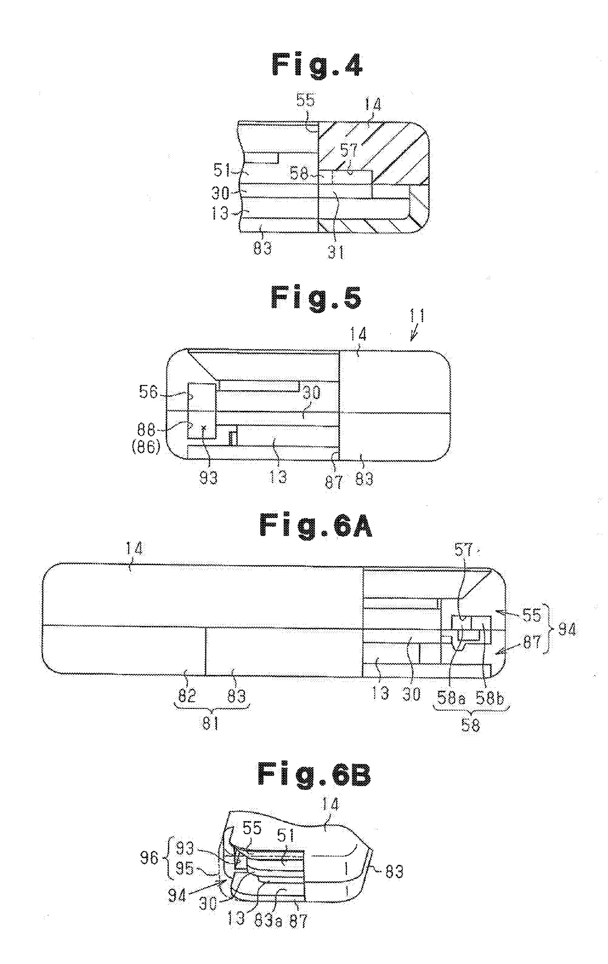

The first lock member holder 57 of the second case part 14 retains a plate-like first lock member 58, or first lock member. The first lock member 58 is formed integrally from a metal material and includes a main portion 58a and an engagement portion 58b extending from the main portion 58a. The main portion 58a includes an insertion hole 58c for insertion of the positioning projection 57b formed in the first lock member holder 57. The first lock member 58 is arranged so that the positioning projection 57b is inserted into the insertion hole 58c, and the engagement portion 58b extends into the L-shaped cutaway portion 55 of the second case part 14 through the open portion 57a. Referring to Fig. 4, when the first case part 13 and the second case part 14 are fastened to each other, the tongue 31 of the first case part 13 closes the opening of the first lock member holder 57 in the second case part 14. Thus, in a state held between the tongue 31 and the opposing surface of the first lock member holder 57, the first lock member 58 is retained in the first lock member holder 57.

Referring to Fig. 2, two semicircular push buttons 61 are respectively inserted into the two button receptacles 53 from the inner side of the second case part 14. The two push buttons 61 are connected to each other by a U-shaped connection member 62, which is arranged in the connection groove 54 of the second case part 14. The push buttons 61 and the connection member 62 are integrally injection molded from a synthetic resin. As shown in Fig. 1, when arranged in the button receptacles 53 and connection groove 54 of the second case part 14, the push buttons 61 and the connection member 62 are flush with the inner surface of the second case part 14. As shown in Fig. 2, the connection member 62 includes two arms 62a, which are respectively connected to the two push buttons 61, and a link 62b connected to the arms 62a. The arms 62a are flexibly connected to the arms 62a so that the two push buttons 61 can be pushed independently from each other.

A box-shaped packing 71 having an open lower portion as viewed in Fig. 1A is arranged between the first case part 13 and the second case part 14. The packing 71 is formed integrally from a rubber material, such as nitrite rubber, urethane rubber, or silicon rubber. The packing 71 includes a main body 71a, which has an open lower portion, and a lip 71b, which extends along the periphery of open end of the main body 71a. The main body 71a is shaped in correspondence with the inner side of the step 52 in the second case part 14, and the lip 71b is arranged on the step 52.

As shown in Fig. 1A, when the packing 71 is arranged between the first case part 13 and the second case part 14, the lip 71b is arranged between the open end surface of the first case part 13 and the open end surface of the fitting portion 51 in a state slightly compressed in the vertical direction. This seals the first case part 13 and the second case part 14 in a manner impervious to liquids.

When the packing 71 is arranged between the first case part 13 and the second case part 14, the upper surface of the main body 71a is held in contact with the opposing inner surface of the second case part 14. Thus, the two push buttons 61 and the connection member 62 are held in a state accommodated in the two button receptacles 53 and the connection groove 54. Contact of the two push buttons 61 and the connection member 62 with the main body 71a restricts the downward movement of the two push buttons 61 and the connection member 62. When any of the two push buttons 61 are pushed, the main body 71a resiliently deforms in an inward direction. This pushes the actuators 43b of the corresponding push switches 43 on the circuit board 42 with the main body 71a of the packing 71.

In a state in which the packing 71 is arranged between the first case part 13 and the second case part 14, the main body 71a separates the two button receptacles 53 and the two push buttons 61 from the inner side of the second case part 14, which accommodates the circuit board 42 in the board compartment 21. Thus, even when liquid, such as water, enters the button receptacles 53 through gaps formed around the corresponding push buttons 61, the liquid does not reach the circuit board 42. Since the main body 71a is formed integrally with the lip 71b, which is held between the open end surface of the first case part 13 and the open end surface of the fitting portion 51 in a slightly compressed state, liquid entering the button receptacles 53 through gaps formed around the push buttons 61 does not enter the inner side of the packing 71.

As shown in Fig. 1A, the cover 81 includes a fixed cover piece 82 and a movable cover piece 83. The movable cover piece 83 covers the battery compartment 25 and the fixed cover piece 82 covers the remaining portion of the first case part 13. When joined with each other, the fixed cover piece 82 and the movable cover piece 83 form a box having an open upper portion.

Referring to Fig. 2, the fixed cover piece 82 is integrally injection molded from a synthetic resin. The fixed cover piece 82 includes a bottom wall 82a and a U-shaped side wall 82b extending along the periphery of the bottom wall 82a. The fixed cover piece 82 has an open lateral side. A U-shaped step 84 extends along the inner surface of the side wall 82b. Three projections 85 are formed on the inner surfaces of the side wall 83b. The projections 85 are arranged in correspondence with the three recesses 36 of the first case part 13.

One of the two opposing short walls of the fixed cover piece 82 is thicker than the other one. An elongated groove 86 is formed in the thicker short wall. The elongated groove 86 has an open end at the open lateral side of the fixed cover piece 82. Further, the elongated groove 86 has a width that is the same as that of the elongated groove 56 in the second case part 14.

The fixed cover piece 82 is joined with the first case part 13, and the three projections 85 are engaged with the three recesses 36 to fasten the fixed cover piece 82 to the first case part 13.

The movable cover piece 83 is integrally injection molded from a synthetic resin. The movable cover piece 83 includes a bottom wall 83a and a U-shaped side wall 83b extending along the periphery of the bottom wall 82a. The movable cover piece 83 has an open lateral, side. One of the two opposing long walls of the movable cover piece 83 is thicker than the other one. The movable cover piece 83 has an L-shaped cutaway portion 87 at a corner formed by the thicker long wall and the adjacent short wall. When the movable cover piece 83 is attached to the first case part 13, the cutaway portion 87 is arranged in correspondence with the cutaway portion 55 of the second case part 14.

An elongated groove 88 extends along the thicker long wall of the movable cover piece 83. One end of the elongated groove 88 opens into the cutaway portion 87. A first step 89 extends along the inner side of the thicker long wall on the bottom surface of the movable cover piece 83. A second step 90 extends along the inner sides of the thinner long wall and the short wall on the bottom surface of the movable cover piece 83. A rail 91 extends parallel to the long walls along each of the steps 89 and 90. The two rails 91 are inserted into and guided by the two guide grooves 35 of the first case part 13. An engaged portion, or recess 92, which is engageable with the projection 33, is formed in the second step 90 in a portion corresponding to the short wall.

The movable cover piece 83 is attached to the first case part 13 in a detachable manner by inserting the two rails 91 into the two guide grooves 35 of the first case part 13 and sliding the movable cover piece 83 toward the fixed cover piece 82. The movement of the movable cover piece 83 in the attaching direction is restricted by the abutment of the movable cover piece 83 against the fixed cover piece 82. Further, the engagement of the rails 91 of the movable cover piece 83 with the corresponding rails 34 of the first case part 13 prevents the movable cover piece 83 from falling off the first case part 13. Additionally, the projection 33 of the first case part 13 is engaged with the recess 92 of the movable cover piece 83. This restricts movement of the movable cover piece 83 in a detaching direction of the movable cover piece 83 and prevents the movable cover piece 83 from falling off the first case part 13.

Referring to Fig. 5, in a state in which the fixed cover piece 82 and the movable cover piece 83 are attached to the first case part 13, a key plate holder 93 is defined by the elongated groove 56 of the second case part 1.4, the side surface of the flange 30 of the first case part 13 that is flush with the inner surface of the elongated groove 56, the elongated groove 86 of the fixed cover piece 82, and the elongated groove 88 of the movable cover piece 83. As shown in Figs. 6A and 6B, in a state in which the fixed cover piece 82 and the movable cover piece 83 are attached to the first case part 13, the L-shaped cutaway portion 55 of the second case part 14 and the L-shaped cutaway portion 87 of the movable cover piece 83 define a key inlet 94. As shown by the broken lines in Fig. 6B, the inner surfaces of the second case part 14, the first case part 13, and the movable cover piece 83 that are exposed in the key inlet 94 define a grip holder 95. The grip holder 95 and the key plate holder 93 define a mechanical key holder 96 for accommodating a mechanical key 101.

The mechanical key 101 is an emergency key used when the battery is drained or when the portable device 11 is not functioning properly. The mechanical key 101 is used to mechanically lock and unlock a vehicle door,

As shown in Fig. 2, the mechanical key 101 is L-shaped and includes a key plate 102 and a grip 103 fixed to one end of the key plate 102. The key plate 102 has a width and length set so that it can be accommodated in the key plate holder 93 of the case 12. The grip 103 extends orthogonal to the key plate 102 and is accommodated in the grip holder 95 of the case 12.

When the key plate 102 is accommodated in the key plate holder 93 and the grip 103 is accommodated in the grip holder 95, that is, when the mechanical key 101 is accommodated in the mechanical key holder 96, the outer surface of the grip 103 extends continuously from the outer surface of the case 12, as shown in Fig. 1B. Thus, the outer surface of the grip 103 serves as part of an ornamental surface of the case 12.

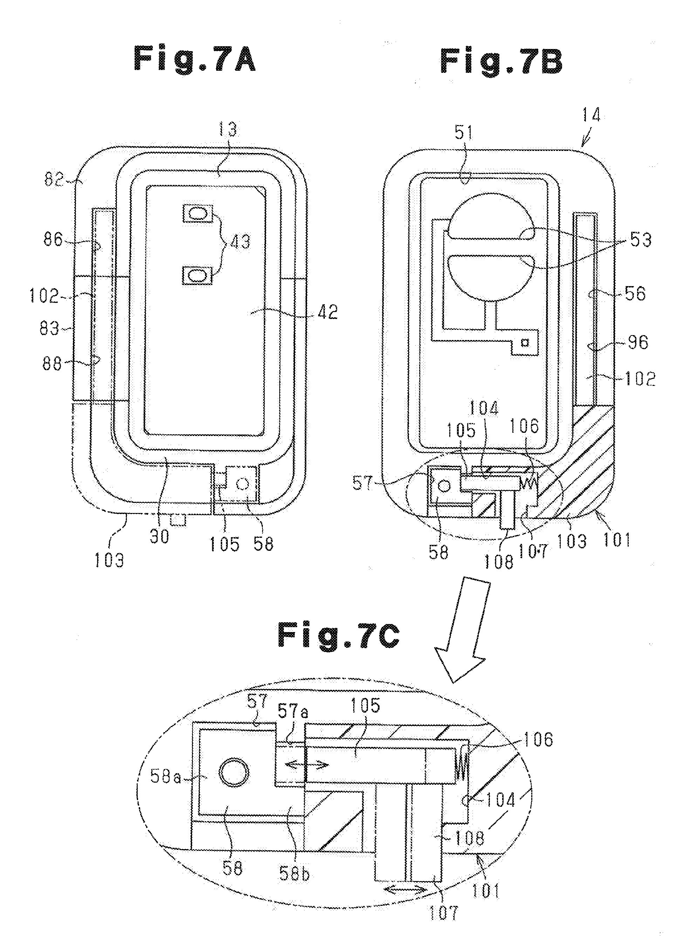

Referring to Figs. 78 and 7C, the end of the grip 103 opposite the end connected to the key plate 102 includes a second lock member holder 104. When the mechanical key 101 is accommodated in the mechanical key holder 96, the second lock member holder 104 is arranged to correspond with the open portion 57a of the first lock member holder 57. The second lock member holder 104 accommodates a second lock member 105, which is movable in the direction the grip 103 extends. A coil spring 106 is arranged between the second lock member 105 and the surface of the second lock member holder 104 opposed to second lock member 105. The force of the coil spring 106 constantly urges the second lock member 105 outward from the second lock member holder 104.

A lever slot 107, which is in communication with the second lock member holder 104, is formed in the surface of the grip 103. A slide lever 108 extends through the lever slot 107. The slide lever 108 has one end fixed to the second lock member 105 and another end exposed from the grip 103. Thus, the slide lever 108 moves integrally with the second lock member 105. The movement of the second lock member 105 and the slide lever 108 in the extending direction of the grip 103 is restricted by the abutment of the slide lever 108 against the wall of the lever slot 107. The slide lever 108 moves the second lock member 105 between a lock position shown by the broken lines in Fig. 7C and an unlock position shown by the solid lines in Fig. 7C.

When the mechanical key 101 is held in the mechanical key holder 96 of the case 12, the force of the coil spring 106 projects the second lock member 105 out of the grip 103. As a result, the second lock member 105 extends into the first lock member holder 57 through the open portion 57a of the case 12 and engages the engagement portion 58b of the first lock member 58. In this state, the second lock member 105 is located at the lock position. When located at the lock position, the engagement of the second lock member 105 with the engagement portion 58b of the first lock member 58 restricts the removal of the mechanical key 101 from the mechanical key holder 96. To arrange the second lock member 105 at the unlock position, the second lock member 105 is moved inward into the second lock member holder 104 against the force of the coil spring 106 to disengage the second lock member 105 from the first lock member 58. When the second lock member 105 is located at the unlock position, the mechanical key 101 is removable from the mechanical key holder 96.

The procedures for assembling the portable device 11 will now be discussed.

The second case part 14 is first arranged on a table with the fitting portion 51 facing upwards. The two push buttons 61 and the connection member 62 are arranged in the two button receptacles 53 and the connection groove 54 of the second case part 14. In this state, the push buttons 61 are flush with the inner surface of the second case part 14.

With its opening facing upwards, the packing 71 is arranged in the fitting portion 51. In this state, the lip 71b of the packing 71 is held on the step 52 of the second case part 14.

Next, the circuit board 42 is fitted into the board compartment 21 of the first case part 13. In this state, the two push switches 43 are exposed, and the negative contact 44 and positive contact 45 are arranged to correspond to the battery compartment 25. Then, the first case part 13 is fitted into the fitting portion 51 of the second case part 14 with the circuit board 42 held in the board compartment 21. The movement of the first case part 13 into the second case part 14 is restricted when the flange 30 of the first case part 13 abuts against the open end surface of the second case part 14.

Then, thermal welding is performed to join the flange 30 of the first case part 13 with the open end surface of the second case part 14. In the preferred embodiment, laser welding is performed with a laser welding device to join the first case part 13 and the second case part 14.

Subsequently, the battery 46 is arranged in the battery compartment 25, and the O-ring 27 is attached to the groove 26 of the battery lid seat 22. Further, the battery lid 47 is fixed to the battery lid seat 22 by fastening the screws 48 to the threaded holes 24a of the bushings 24. This holds the battery 46 in the battery compartment 25, and fixes the battery lid 47 to the first case part 13.

Afterwards, the fixed cover piece 82 is placed on the first case part 13, and the three projections 85 are engaged with the three recesses 36. This fastens the fixed cover piece 82 to the first case part 13.

Then, the movable cover piece 83 is arranged beside the first case part 13 for attachment. The two rails 91 formed in the movable cover piece 83 are inserted into the two guide grooves 35 of the first case part 13. The movement of the movable cover piece 83 toward the fixed cover piece 82 is restricted when the side wall 83b and bottom wall 83a of the movable cover piece 83 abut against the side wall 82b and bottom wall 82a of the fixed cover piece 82. In this state, the recess 92 of the movable cover piece 83 is engaged with the projection 33 of the first case part 13. This restricts removal of the movable cover piece 83 and prevents the movable cover piece 83 from moving away from the fixed cover piece 82.

The attachment of the movable cover piece 83 to the first case part 13 forms the key plate holder 93, the grip holder 95, and the key inlet 94. The slide lever 108 is operated to hold the second lock member 105 at the unlock position. Then, the mechanical key 101 is inserted into the key inlet 94 from the key plate 102. Referring to Figs. 7A and 7B, the movement of the mechanical key 101 into the mechanical key holder 96 is restricted by the abutment of the grip 103 against the outer wall of the fitting portion 51, the edge of the elongated groove 56 in the second case part 14, the flange 30 of the first case part 13, and the edge of the elongated groove 88 in the movable cover piece 83.

In this state, the second lock member 105 is located at a position corresponding to the space between the open portion 57a of the first lock member holder 57 and the engagement portion 58b of the first lock member 58. Then, the slide lever 108 is released, and the force of the coil spring 106 moves the second lock member 105 to the lock position so that the distal end of the second lock member 105 engages the engagement portion 58b of the first lock member 58. As a result, the mechanical key 101 is prevented from falling out of the mechanical key holder 96.

This completes the assembly of the portable device 11. In this manner, the push buttons 61, the packing 71, and the first case part 13 are stacked on the second case part 14. In the stacked state, laser welding is performed to join the first case part 13 and the second case part 14 to each other in a superimposed state. This is advantageous in that the second case part 14 does not have to be flipped over during the assembly of the portable device 11. After the first case part 13 is joined with the second case part 14, the fixed cover piece 82, the movable cover piece 83, and the mechanical key 101 are attached to complete the assembly of the portable device 11. This improves the assembling efficiency of the portable device 11.

The procedures for joining the first case part 13 and the second case part 14 will now be discussed. In the preferred embodiment, a laser welding device 111 is used to thermally weld and join the first case part 13 and the second case part. 14 to each other in a superimposed state,

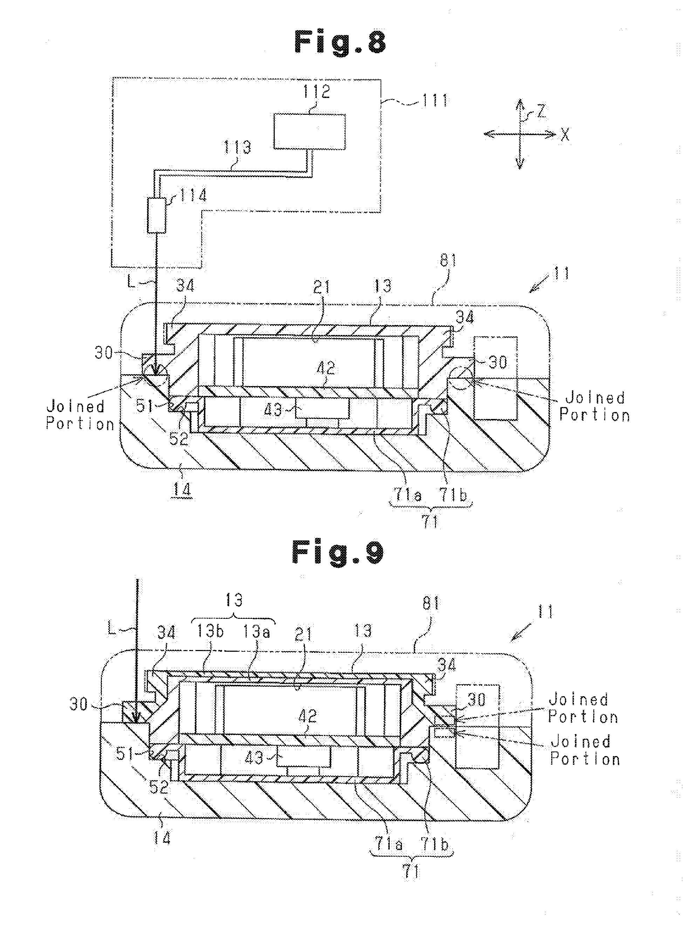

The laser welding device 111 will first be briefly described. Referring to Fig. 8, the laser welding device 111 generates a laser beam L with a laser beam generator 112. The laser beam L travels through an optical fiber 113 and a converging lens 114. Then, the laser beam L is directed toward welded portions of two resin parts that are joined with each other. The laser beam source used for such laser welding may be an yttrium aluminum garnet (YAG) laser, a glass laser, a ruby laser, a helium-neon gas laser, an argon laser, a fiber laser, or a semiconductor laser. Further, the laser beam generator 112 is fixed to a housing (not shown) of the laser welding device 111. The converging lens 114 is driven by a drive device (not shown) and is movable in an XYZ coordinate system in the directions of the X, Y, and Z axes. Two parts (in the preferred embodiment, the first case part 13 and the second case part 14) are joined with each other and supported by a parts holder. In this state, the drive device is driven to move the converging lens 114 relative to the parts in order to direct the laser beam L toward the joining portions of the parts. Instead of the converging lens 114 being moved, the parts holder may be moved.

The material of the first case part 13 and second case part 14 that are laser welded and joined with each other will now be described. The synthetic resin used to form the first case part 13 and second case part 14 may be a non-crystalline resin, such as polystyrene, polyethylene, and polycarbonate, or a crystalline resin, such as polypropylene, polybutylene terephthalate, polyethylene terephthalate, polyamide, and polyacetal. In the preferred embodiment, polycarbonate is used. The first case part 13 transmits the laser beam L, or has a transmittance with respect to the spectrum of the laser beam L. The second case part 14 absorbs the spectrum of the laser beam L, or has an absorbance with respect to the spectrum of the laser beam L. The transmittance and absorbance of the first case part 13 and second case part 14 are dependent on the amount and dispersion of an additive (colorant), such as dye and pigment, in the synthetic resin forming the first case part 13 and second case part 14.

In this embodiment, pigment of a predetermined color (e.g.., carbon black) is added as a laser beam absorption colorant to the synthetic resin forming the second case part 14. The amount and dispersion of the absorption colorant for the synthetic resin is determined so that the second case part 14 has the required laser beam absorbance for generating the necessary heat. The laser light absorption colorant may be a pigment colorant or a dye colorant. Such pigment colorant and dye colorant may be combined to generate the necessary heat. This would enable the welding conditions to be flexible. Carbon black, which is described above, is generally used as a pigment colorant. The cover 81 (i.e., the fixed cover piece 82 and the movable cover piece 83) is formed with the same synthetic resin as the second case part 14 and has the same color as the second case part 14. The second case part 14 and the cover 81 have the same color to improve the aesthetic appeal of the portable device 11. The type, amount, and dispersion of the pigment for the second case part 14 and cover 81 are determined so that the second case part 14 and cover 81 are non-transparent to visible light, that is, so that the second case part 14 and cover 81 have a visible light transmittance of less than 10%.

Referring to Fig. 9, the first case part 13 includes a first resin portion 13a and a second resin portion 13b. The first and second resin portions 13a and 13b are integrally molded by performing two-color molding or insert molding,

The first resin portion 13a is box-shaped and includes the board compartment 21. Dye having the same color as the pigment added to the second case part 14 is added as a colorant to the synthetic resin forming the first resin portion 13a. The first resin portion 13a is non-transparent to visible light. More specifically, the type, amount, and dispersion of the pigment and dye for the synthetic resin of the first resin portion 13a are determined so that the transmittance of visible light is less than 10%. The first resin portion 13a may have any color as long as it is non-transparent to visible light. The first, resin portion 13a substantially does not undergo laser welding. Thus, there are no requirements with regard to the transmittance and absorbance of the laser beam L for the first resin portion 13a. This eliminates the need for adjustment of parameters related with the transmittance and absorbance of the laser beam L. Further, the first resin portion 13a does not have to transmit the laser beam L.

The second resin portion 13b is box-shaped and surrounds the first resin portion 13a. Part of the second resin portion 13b forms the flange 30. Further, the second resin second 13b is colorless and transparent to visible light.

Dye having a predetermined color may be added to the synthetic resin of the second resin portion 13b. The type, amount, and dispersion of the dye for the synthetic resin of the second resin portion 13b are determined so that the second resin portion 13b is colored and transparent. In any case, the type, amount, and dispersion of the dye for the synthetic resin of the second resin portion 13b are determined so that the transmittance of visible light is 10% or greater.

More specifically, the range for the transmittance of visible light for the second resin portion 13b is 10% to 100%. When the visible light transmittance is 10% or less, it becomes difficult to visually inspect welded portions (welded state) of the second resin portion 13b and the open end surface of the second case part 14. However, the type, amount, and dispersion of the dye for the synthetic resin of the second resin portion 13b are determined to ensure the required transmittance with respect to the laser beam L so that the second resin portion 13b sufficiently transmits the laser beam L,

The second resin portion 13b differs from the second case part 14 in that a dye is added to the synthetic resin forming the second resin portion 13b. This is for the following reasons. A pigment does not dissolve in a synthetic resin and is dispersed as grains (coagulations). Thus, the pigment absorbs and diffuses (reflects) the laser beam L and renders the transmission of the laser beam L difficult. In comparison, a dye is dissolved in the synthetic resin at a molecular level. This enables uniform coloring and stabilizes the color phase. A dye has a high light transmission property although this is affected by the synthetic resin to which the dye is added.

Thus, in the first embodiment, pigment is added to the synthetic resin of the second case part 14, and dye is added to the synthetic resin of the second resin portion 13b in the first case part 13. The first resin portion 13a of the first case part 13 substantially does not undergo laser welding. Thus, there are no requirements with regard to the transmittance and absorbance of the laser beam L for the first resin portion 13a. Accordingly, as long as the first resin portion 13a is non-transparent to visible light, dye or pigment of a predetermined color may be added to the synthetic resin of the first resin portion 13a.

The joining of the first case part 13 and the second case part 14 with the laser welding device 111 will now be described. In a state in which the circuit board 42 is facing toward the second case part 14, the first case part 13 is fitted into the fitting portion 51 of the second case part 14. In a state in which the flange 30 of the first case part 13 is engaged with the open end surface of the second case part 14, the first case part 13 and second case part 14 are supported by and fixed to the parts holder of the laser welding device 111.

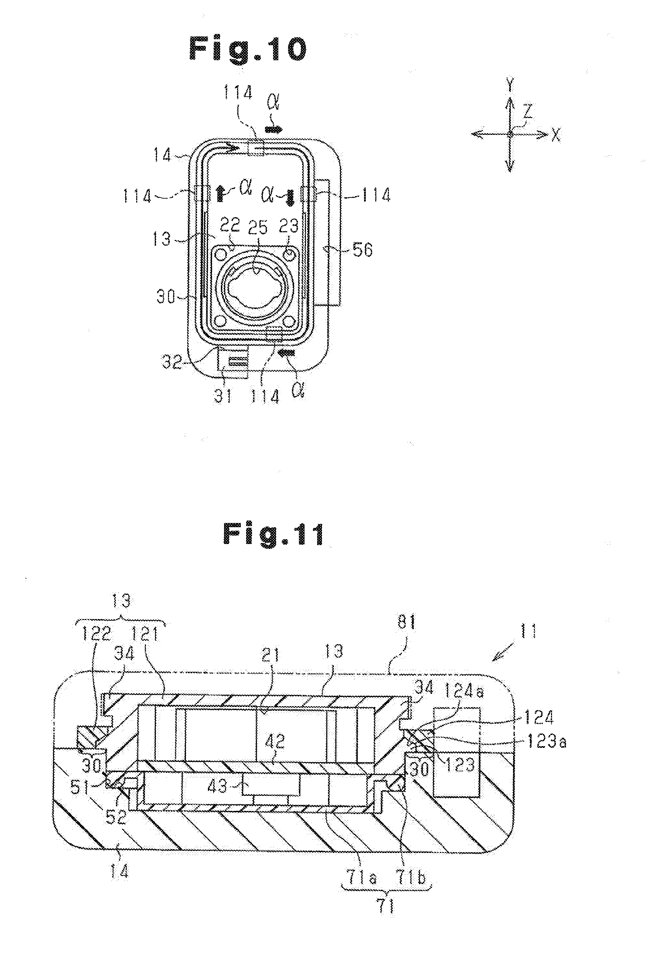

Then, a laser beam L is emitted and directed via the converging lens 114 toward the flange 30 from the first case part 13. More specifically, as shown by arrow α in Fig. 10, the laser beam L is directed toward the flange 30 while continuously moving the converging lens 114 along the flange 30 of the first case part 13. The laser beam L emitted through the converging lens 114 and transmitted through the flange 30 reaches the open end surface of the second case part 14. The energy of the laser beam L is absorbed at the portion of the open end surface of the joined with the flange 30. The absorption of the laser energy generates heat, which fuses the joined portions (joined surfaces) of the flange 30 and the second case part 14. Afterwards, the fused portions, or the joined portions of the flange 30 and the second case part 14, are cooled and solidified. This joins the flange 30 of the first case part 13 with the open end surface of the second case part 14. The flange 30 of the first case part 13 with the open end surface of the second case part 14 may be partially joined with each other at a number of locations. In the preferred embodiment, the flange 30 functions as the joined portion of the first case part 13, and the open end surface of the second case part 14 as the joined portion of the second case part 14. The second resin portion 13b (i.e., the flange 30) of the first case part 13 is colorless and transparent. This enables visual inspection of the welded portion between the flange 30 and the second case part 14 through the first case part 13. Accordingly, the joining of the first case part 13 and the second case part 14 may be checked during the manufacturing of the portable device 11.

The flange 30 of the first case part 13 and the open end surface of the second case part 14 may be partially joined with each other at a number of locations. In the preferred embodiment, the flange 30 functions as the joined portion of the first case part 13, and the open end surface of the second case part 14 as the joined portion of the second case part 14.

In addition to the above-described laser fusing, known methods for thermally welding synthetic resin material include ultrasonic welding, vibration welding, and hot plate welding. Ultrasonic welding, vibration welding, and hot plate welding may be performed to join the first case part 13 and the second case part 14. However, it is preferred that laser welding be performed to join the first case part 13 and the second case part 14.

Ultrasonic welding is performed by simultaneously applying pressure and fine vibrations to the contacting surfaces of the two resin members that are welded together. This generates high friction heat and fuses the resin. However, the heating produces fine resin particles. Further, the fine vibrations may generate vibration stress that afflicts damages to the first case part 13, the second case part 14, and the circuit board 42. Vibration welding is performed by applying pressure and friction to one of two members that are welded with each other. This generates high friction heat that fuses the resin. Although the vibration stress that is generated is less as compared with ultrasonic welding, the heating produces fine particles. Hot plate welding is performed to apply heat to the entire product with a heater plate or the like in order to cause fusion. Hot plate welding does not produce resin particles. However, heat cannot be generated locally. Thus, the application of hot plate heating to a product containing the circuit board 42 is difficult. Laser welding does not cause such problems and does not affect the first case part 13, the second case part 14, and the circuit board 42 with heat or vibrations in such a manner.

When or after heating and fusing joined portions with the laser beam L, pressure may be applied to the joined portions to further ensure the joining of the first case part 13 and the second case part 14. For example, the first case part 13 may be pressed toward the second case part 14 with a pressing means, such as a roller (not shown). In this case, the pressing means follows the movement of the converging lens 114. Further, the pressing means continues to apply pressure until the joined portions of the first case part 13 and the second case part 14 are cooled. This prevents the generation of voids (bubbles) in the joined portions of the first case part 13 and the second case part 14.

The first embodiment has the advantages described below.
(1) The flange 30 of the first case part 13 that transfers the laser beam L is superimposed on the open end surface of the second case part 14 that absorbs the laser beam. In this state, the laser beam L is emitted through the first case part 13 and toward the flange 30. This welds the flange 30 and the open end surface of the second case part 14 to each other.
   As a result, the first case part 13 and the second case part 14 cannot be disassembled. For someone to remove the circuit board 42 from the case 12, the joining of the first case part 13 and the second case part 14 must be broken. However, when breaking the joining of the first case part 13 and the second case part 14, it would become difficult to join the first case part 13 and the second case part 14 again. Accordingly, a third person would not be able to join the first case part 13 and the second case part 14 again after removing the circuit board 42. This enables easy user recognition of removal of the circuit board 42.
(2) The second case part 14 and the first case part 13, excluding the flange 30, are non-transparent to visible light. Only the flange 30, which is the portion of the first case part 13 joined with the second case part 14, is transparent to visible light.
   Since the second case part 14 and most of the first case part 13 are non-transparent to visible light, the circuit board 42 is hidden and cannot be viewed from the outer side. Further, the flange 30 is transparent to visible light. This enables visible inspection of the welded portion. Thus, during manufacturing of the case 12, the joined state of the first case part 13 and the second case part 14 may easily be checked. Accordingly, the circuit board 42 is hidden, and the quality related with the joining (welding) of the first case part 13 and the second case part 14 is ensured.
(3) The first case part 13 is formed by integrally molding the first resin portion 13a, which is box-shaped and includes the board compartment 21, and the second resin portion 13b, which is box-shaped and surrounds the flange 30 and the first resin portion 13a.
   Therefore, without increasing the number of components, the circuit board 42 is hidden while enabling visual inspection of the welded portions of the first case part 13 and the second case part 14.
(4) The transmittance of visible light is less than 10% in the first case part 13 and the second case part 14. This makes it difficult to see the circuit board 42 accommodated in the case 12, which is formed by the first case part 13 and the second case part 14. Further, the transmittance of visible light is 10% or greater in the second resin portion 13b, which includes the flange 30 of the first case part 13. This enables visible inspection of the joined portions (welded portions) of the flange 30 and the second case part 14. Accordingly, the circuit board 42, which is accommodated in the case 12, is hidden, and the quality related with the joining (welding) of the first case part 13 and the second case part 14 is ensured.

A second embodiment of the present invention will now be described. The second embodiment differs from the first embodiment in that the first case part is formed by joining two separate members. To avoid redundancy, like or same reference numerals are given to those components that are the same as the corresponding components of the first embodiment. Such components will not be described in detail.

Referring to Fig. 11, the first case part 13 includes a first resin member 121 and a second resin member 122, which are joined with each other.

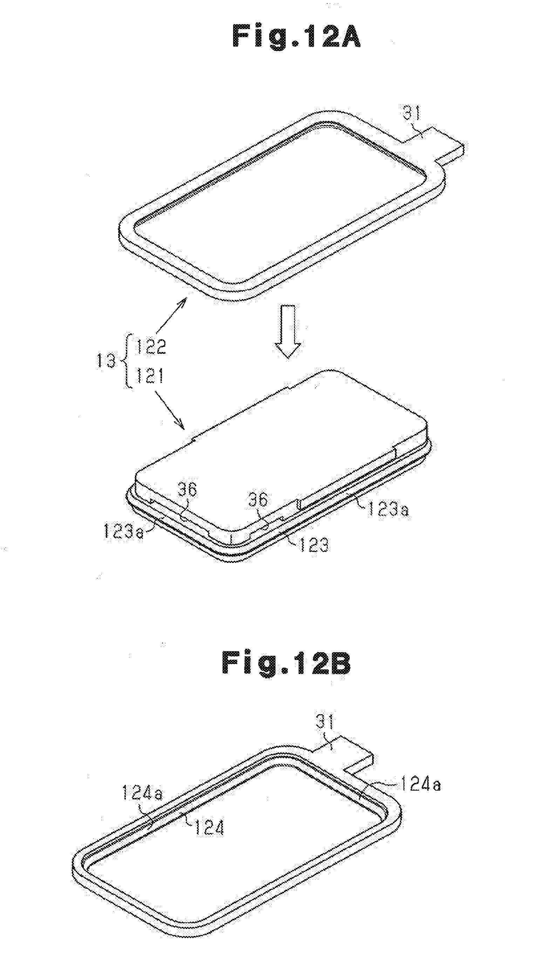

The first resin member 121 is box-shaped and includes the board compartment 21 and part of the flange 30. A rectangular frame-like first flange portion 123, which is shown in Fig. 12A, is formed around the first resin member 121. The first flange portion 123, which includes an upper surface defining an inclined surface 123a, has a thickness that decreases toward the outer side.

A dye having the same color as the pigment added to the second case part 14 is added as a colorant to the synthetic resin forming the first resin merger 121. The type, amount, and dispersion of the pigment and dye for the synthetic resin of the first resin member 121 are determined so that the first resin member 121 is non-transparent to visible light, that is, the transmittance of visible light in the first resin member 121 is less than 10%. The first resin member 121 may have any color as long as it is non-transparent to visible light. The first resin member 121 substantially does not undergo laser welding. Thus, there are no requirements with regard to the transmittance and absorbance of the laser beam L for the first resin member 121. This eliminates the need for adjustment of parameters related to the and absorbance of the laser beam L. Further, the first resin member 121 does not have to transmit the laser beam L.

As shown in Fig. 11 and 12A, the second resin member 122 is frame-shaped and serves as a second, flange portion that includes the tongue 31. As shown in Fig. 12B, a step 124 is formed on one side of the second resin member 122 in correspondence with the first flange portion 123 of the first resin member 121. The step 124, which defines an inclined surface 124a at one side, has a thickness that decreases toward the inner side.

The second resin member 122 is attached to the first resin member 121 so that the inclined surface 124a faces toward the inclined surface 123a of the first resin member 121. In this state, the inclined surface 124a comes into contact with the inclined surface 123a of the first flange portion 123. When the first resin member 121 and the second resin member 122 are joined with each other, the first flange portion 123 of the first resin member 121 forms the flange 30 with the second resin member 122 (second flange portion).

The second resin member 122 is colorless and transparent to visible light. Dye having a predetermined color may be added to the synthetic resin of the second resin member 122. The type, amount, and dispersion or the dye for the synthetic resin of the second resin member 122 are determined so that the second resin member 122 is colored and transparent. In any case, the type, amount, and dispersion of the dye for the synthetic resin of the second resin member 122 are determined so that the transmittance of visible light is 10% or greater. That is, the range for the transmittance of visible light for the second resin member 122 is 10% to 100%. When the visible light transmittance is 10% or less, it becomes difficult to visually inspect welded portions (welded state) of the second resin member 122 and the open end surface of the second case part 14. However, the type, amount, and dispersion of the dye for the synthetic resin of the second resin member 122 are determined to ensure the required transmittance with respect to the laser beam L.

When manufacturing the portable device 11, the first and second resin members 121 and 122 are welded to each other with the laser welding device 111. More specifically, in a state in which the first resin member 121 and the second resin member 122 are joined with each other, a laser beam L is emitted and transmitted through the second resin member 122. The laser beam L is directed toward the flange 30 while continuously moving the converging lens 114 along the second resin member 122. This joins the inclined surface 123a of the first resin member 121 entirely with the inclined surface 124a of the second resin member 122. The second resin member 122 is colorless and transparent. This enables visual inspection of the welded portions of the second resin member 122 and the first resin member 121 from the side of the second resin member 122.

Afterwards, the first case part 13, which is formed by joining the first resin member 121 and the second resin member 122, is laser welded and joined with the second case part 14 in the same manner as the first embodiment. Unlike the joining of the first case part 13 and the second case part 14 performed in a state in which the circuit board 42 is accommodated in the first case part 13, the joining of the first resin member 121 and the second resin member may be welded together by performing ultrasonic welding, vibration welding, or hot plate welding.

Accordingly, the second embodiment also hides the circuit board 42 and ensures quality related with the joining (welding) of the first case part 13 and the second case part 14. Further, the first resin member 121 and the second resin member 122 are joined with each other through thermal welding. Thus, fasteners such as bolts or screws are not necessary to join the first resin member 121 and the second resin, member 122. Further, space for such fasteners does not have to be provided by the first resin member 121 and the second resin member 122. This enables the size of the case 12 to be reduced and minimizes the number of components.

In the above embodiments, the present invention is embodied in a case of a portable device. However, the present invention may be embodied in a case, which incorporates electronic components, for other devices.

## Claims

1. A case (12) for accommodating a predetermined component, the case being **characterized by**:
a first case part (13) formed from a synthetic resin, the first case part including a non-transparent portion (13a; 121) that is non-transparent to visible light and a transparent portion (13b; 122) that is transparent to visible light, arranged adjacent to and outward from the non-transparent portion, and transmissible to laser light; and
a second case part (14) that is transparent to visible light and formed from a synthetic resin, wherein the second case part absorbs laser light and is superimposed with the first case part in a state joined with the transparent portion.

2. The case according to claim 1, **characterized in that**:
the non-transparent portion and the transparent portion of the first case part are integrally molded,

3. The case according to claim 1, **characterized in that**:
the non-transparent portion and the transparent portion of the first case part are separate components and integrally joined with each other.

4. The case according to claim 3, **characterized in that**:
the non-transparent portion and the transparent portion of the first case part are joined with each other in a thermally welded state.

5. The case according to any one of claims 2 to 4,
**characterized in that**:
the transparent portion surrounds the non-transparent portion.

6. The case according to any one of claims 1 to 5,
**characterized in that**:
the second case part and the non-transparent portion of the first case part each have a visible light transmittance of less than 10%.

7. The case according to any one of claims 1 to 6,
**characterized in that**:
the transparent portion of the first case part has a visible light transmittance of 10% or greater.

8. A portable device for performing wireless communication with a predetermined communication subject, the portable device including a circuit board, on which an electronic component used to perform wireless communication is mounted, and a case for accommodating the circuit board, the portable device being **characterized in that** the case includes:
a first case part (13) formed from a synthetic resin, the first case part including a non-transparent portion (13a; 121) that is non-transparent to visible light and a transparent portion (13b; 122) that is transparent to visible light, arranged adjacent to and outward from the non-transparent portion, and transmissible to laser light; and
a second case part (14) that is transparent to visible light and formed from a synthetic resin, wherein the second case part absorbs laser light and is superimposed with the first case part in a state joined with the transparent portion.

9. The portable device according to claim 8,
**characterized in that**:
the non-transparent portion and the transparent portion of the first case part are integrally molded.

10. The portable device according to claim 8,
**characterized in that**:
the non-transparent portion and the transparent portion of the first case part are separate components that are integrally joined with each other.

11. The portable device according to claim 10,
**characterized in that**:
the non-transparent portion and the transparent portion of the first case part are joined with each other in a thermally welded state.

12. The portable device according to any one of claims 8 to 11, **characterized in that**:
the transparent portion surrounds the non-transparent portion.

13. The portable device according to any one of claims 8 to 12, **characterized in that**:
the second case part and the non-transparent portion of the first case part each have a visible light transmittance of less than 10%, and the transparent portion of the first case part has a visible light transmittance of 10% or greater.
